# EUROPEAN PATENT SPECIFICATION

(11) **EP 2 479 911 B1**
(45) Date of publication and mention of the grant of the patent: **30.03.2016**
(21) Application number: 11290034.5
(22) Date of filing: 21.01.2011
(51) Int. Cl.: H04J 14/08

(54) **Method of optical data transmission**
Verfahren zur optischen Datenübertragung
Procédé pour transmission optique de données

(43) Date of publication of application: 25.07.2012
(73) Proprietor: ALCATEL LUCENT, 92100 Boulogne-Billancourt (FR)
(72) Inventor: Pointurier, Yvan, 91300 Massy (FR); Simmonneau, Christian, 94800 Villejuif (FR)
(74) Representative: Berthier, Karine

(56) References cited:
- EP-A2- 0 892 516
- CN-B- 101 047 464
- US-A1- 2007 140 696
- Zirngibl, Martin: "New Networking Architectures and Technologies", http://yuba.stanford.edu/lb/program.html Stanford Workshop on Load-Balancing, 19 May 2004 (2004-05-19), pages 1-32, XP002635663, Stanford, USA Retrieved from the Internet: URL:http://yuba.stanford.edu/lb/zirngibl.p pt [retrieved on 2011-05-06]
- PAPADIMITRIOU G I ET AL: "Optical Switching: Switch Fabrics, Techniques, and Architectures", JOURNAL OF LIGHTWAVE TECHNOLOGY, IEEE SERVICE CENTER, NEW YORK, NY, US, vol. 21, no. 2, 1 February 2003 (2003-02-01), pages 384-405, XP011064641, ISSN: 0733-8724

## Description

### Field of the invention

The invention relates to a method of optical data transmission.

### Background

In optical networks, data can be transmitted using optical signals at different wavelengths, which is known as wavelength division multiplexing (WDM). At each wavelength, an optical signal transports a data signal. Such data signals may be time division multiplex (TDM) signals, which consist of timeslots of constant time length. The TDM data signal contains within a timeslot a data frame.

Furthermore, it has been proposed to transmit header information related to the data frames of the different TDM data signals within an additional TDM header signal, which is carried by an additional optical TDM signal at an additional wavelength. Within its timeslots, the TDM header signal contains header information frames, which provide routing information related to the data frames of the TDM data signals.

The TDM header signal consists of timeslots, whose duration is preferably equal to the duration of the timeslots of the TDM data signals. The routing information contained in a header information frame indicates, whether an optical network element shall drop a related data frame of a TDM data signal or whether the optical network element shall let the data frame transit through the optical network element further on to other optical network elements.

Optical network elements are connected in a ring structure. Since the routing information contained within the header information frames of the TDM header signal allows an optical network element to decide, whether a termination an optical TDM signal containing a TDM data signal is necessary, or whether the optical TDM signal may transit through the optical network element without a termination being

necessary, the optical network elements do not need to terminate all optical TDM signals, but at least only the optical TDM signal carrying the TDM header signal.

### Summary

A method of optical data transmission is proposed.

An optical TDM signal containing header information frames is received at a first wavelength. Other optical TDM signals containing data frames are received at other wavelengths. The received optical TDM signals are terminated.

From the other optical TDM signals, respective synchronous TDM data signals are recovered. These synchronous TDM data signals contain data frames within synchronous timeslots.

From the optical TDM signal containing header information frames, a TDM header signal is recovered, which contains header information frames within timeslots that are associated with timeslots of the recovered synchronous TDM data signals.

A duration of the time slots containing the header information frames is equal to a duration of the time slots containing the data frames.

New synchronous TDM data signals are generated, by inserting a recovered data frame into the generated new synchronous TDM data signals. For this, the recovered header information frames are used.

A new TDM header signal is generated, using the recovered header information frames.

Into empty timeslots of the generated new synchronous TDM data signals, data frames containing dummy data are inserted.

Furthermore, into timeslots of the generated new TDM header signal, header information frames are inserted, which indicate the dummy data of the inserted data frames.

A new optical TDM signal containing a header information signal is generated at that wavelength, at which the optical TDM signal carrying the received header signal was received, using the generated new TDM header signal.

New optical TDM signals containing TDM data signals are generated at those wavelengths, at which the optical TDM signals containing the data frames were received, using the generated new TDM data signals.

Finally, the new optical TDM signals are transmitted.

The proposed method is a method, which can be carried out at a network device and which has a number of advantages.

By inserting into empty timeslots of the generated new synchronous TDM data signals data frames, which contain dummy data, it is ensured, that the resulting new optical TDM signals contain within these previously empty timeslots at least dummy data. The advantage is, that the optical transmission power is kept above a minimum power level even during the previously empty timeslots. Other network elements, which receive these timeslots containing data frames with the dummy data, may amplify this optical signal using an optical amplifier, such as an erbium doped fibre amplifier (EDFA), without facing load problems at this optical amplifier. If the previously empty timeslots were not filled with data frames carrying dummy data, the optical power of the optical TDM signal would be below a minimum threshold, which would cause the optical amplifier to not operate properly anymore. Thus, by inserting the data frames containing the dummy data, a proper operation of optical amplifiers used at other optical network elements is guaranteed.

Furthermore, by inserting into the new TDM header signal control information frames, which indicate, that the inserted data frames contain dummy data, other optical network elements are informed by these inserted control information frames, that the dummy data of the inserted data frames may be overwritten, in order to insert at these other optical network elements data frames with other data for the purpose of transmission within the ring network. If the inserted control information frames would not indicate, that the inserted data frames containing the dummy data actually contain dummy data, other optical network elements would not consider the timeslots of these inserted data frames for transmitting data of other data frames along the network, which would reduce the overall transmission capacity of the network.

Even furthermore, by terminating the optical TDM signals transmitted at the respective wavelengths, and by generating new optical TDM signals at these respective wavelengths, it is ensured, that an oscillation of the optical TDM signals is avoided, in the case that these optical TDM signals are transmitted on an optical ring network.

The document US 2007/0140696 A1 discloses a method of transmitting multiple optical data signals by means of TDM signals, while in addition for each data signal a control signal is present.

The document EP 0892516 A2 discloses a method of optical data transmission using an optical TDM signal as well as control information that is transmitted by a linearly chirped control protocol signal.

The document CN 101047464B discloses a data transmission via optical data signals, where also multi-cast data is transmitted.

The document "Zirngibl, Martin: 'New Networking Architectures and Technologies', http://yuba.stanford.edu/lb/program.html Stanford Workshop on Load-Balancing, 19 May 2004 (2004-05-19), pages 1-32, XP002635663, Stanford, USA" discloses an optical data transmission system, in which multiple optical TDM signals of different wavelengths are used and in which unused time slots are filled with dummy packets.

The document "PAPADIMITRIOU GI ET AL: 'Optical Switching: Switch Fabrics, Techniques, and Architectures', JOURNAL OF LIGHTWAVE TECHNOLOGY, IEEE SERVICE CENTER, NEW YORK, NY, US, vol. 21, no. 2, 1 February 2003 (2003-02-01), pages 384-405, XP011064641, ISSN: 0733-8724" discloses a data transmission system using optical TDM data signals of different respective wavelengths, wherein dummy packets are inserted in the case of absence of useful payload.

### Brief description of the Figures

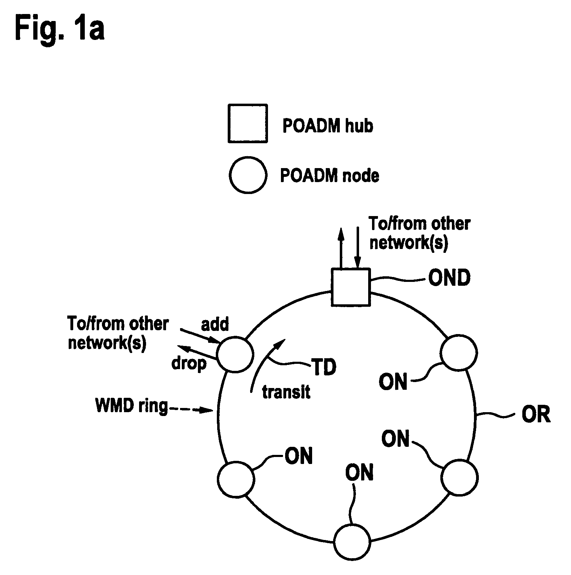

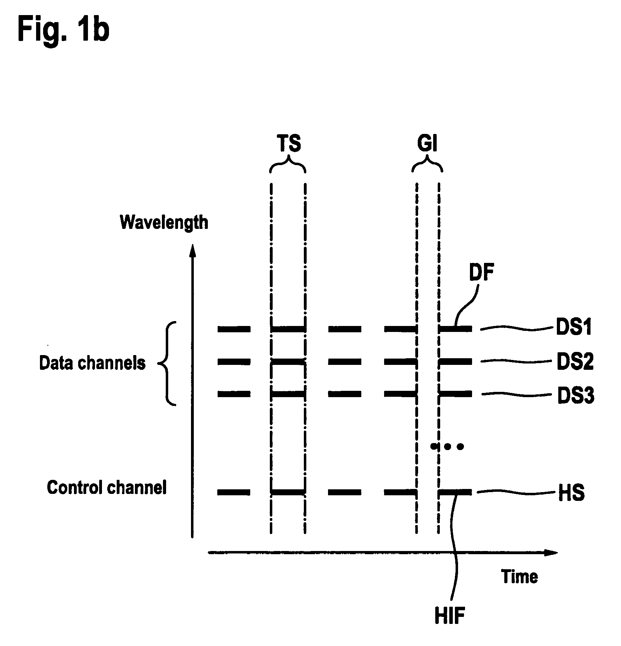

Figure 1 a shows an optical ring network.
Figure 1 b shows different TDM signals.
Figure 2 shows a proposed optical network element.
Figure 3 shows a line card of the proposed optical network element.
Figure 4 shows an alternative solution of the proposed optical network element.

### Description of embodiments

Figure 1a shows an optical ring network ORN, which consists of a number of optical nodes ON, as well as an optical network device OND, which are connected by an optical ring OR.

The optical ring OR is given in the form of one or more optical fibres, over which optical transmission according to wavelength division multiplexing is possible. Optical data signals are transmitted along the optical ring OR along at least one transmission direction TD.

The optical nodes ON may drop data from optical data signals transmitted along the optical ring OR, or may add data to the optical data signals.

Figure 1b illustrates the transmission of TDM data signals DS1, DS2, DS3 along different optical time division multiplex signals on different wavelengths, as well as transmission of a header signal HS along a control channel on a separate wavelength.

At each wavelength, an optical TDM signal transports a data signal DS1, DS2, DS3. The data signals DS1, DS2, D3 consist of timeslots TS of constant time length. The TDM data signals contain within the timeslots TS data frames DF.

Header information related to the data frames DF of the different TDM data signals DS1, DS, DS3 is transmitted within the TDM header signal HS. Within its timeslots TS, the TDM header signal HS contains header information frames HIF, which provide routing information related to the data frames DF of the TDM data signals DS1, DS2, DS3. The duration of the time timeslots TS of the header signal HS is equal to the duration of the time timeslots TS of the data signals DS1, DS2, DS3. Alternatively, the duration of the time timeslots TS of the header signal HS is different to the duration of the time timeslots TS of the data signals DS1, DS2, DS3. Furthermore, the frames HIF of the header signal HS do not have to be separated by a guard interval GI.

The data signals DS1, DS2, DS3 are transmitted by respective optical TDM signal at respective different wavelengths. The data signals DS1, DS2, DS3 are synchronous to each other, such that their timeslots TS have same duration lengths, and such that their timeslots TS are synchronous to each other.

The header signal HS is transmitted by an optical TDM signal at a wavelength different to the wavelengths of the data signals DS1, DS2, DS3. The timeslots TS of the header signal HS have the same time length as the timeslots TS of the data signals DS1, DS2, DS3. The header signal HS is preferably synchronous to the data signals DS1, DS2, DS3. Alternatively, the header signal HS is not synchronous to the data signals DS1, DS2, DS3. Within a header information frame HIF of the header signal HS, routing information is provided, which indicates to an optical node or an optical network device, whether the optical node or the optical network device has to drop one or more data frames DF of one ore more data signals DS1, DS2, DS3. Furthermore, the routing information indicates, whether the optical node or the optical network device shall let a data frame DF transit through the node or the device to the next node or device on the optical ring OR shown in Figure 1 a.

The routing information of a header information frame HIF related to a data frame DF of a data signal DS1, DS2, DS3 does not have to be transmitted in the exact same timeslot TS, but may preferably be transmitted in a timeslot TS, which precedes the timeslot TS of the data frame DF that is to be dropped or transmitted further on.

The timeslots TS of the data signals DS1, DS2, DS3 are separated by a guard interval GI. The optical nodes ON add data for data transmission, by adding a data frame DF into a data signal DS1, DS2, DS3. For determining, into which timeslot TS of a data signal DS1, DS2, DS3 the optical node may insert a data frame DF, the optical node analyses the routing information contained within the header information frames HIF of the header signal HS. Thus, the optical node determines, which timeslot TS of a data signal DS1, DS2, DS3 is empty, which then may be used for inserting a data frame DF.

Coming bock to Figure 1a, it is to be explained, that an optical TDM signal, of which no data frames are to be dropped at an optical node ON, or into which an optical node ON wants to insert no data frames, may transit through the node ON without being subject to a conversion from the optical domain to the electrical domain and back to the optical domain. Thus, an optical node ON performs preferably an optical electrical conversion only of such optical data signals, which are subject to a dropping or an addition of data frames.

Furthermore, an optical node ON may improve an optical TDM signals transmitted on the optical ring, by amplifying the optical TDM signal using an optical amplifier, such as an erbium doped fibre amplifier (EDFA).

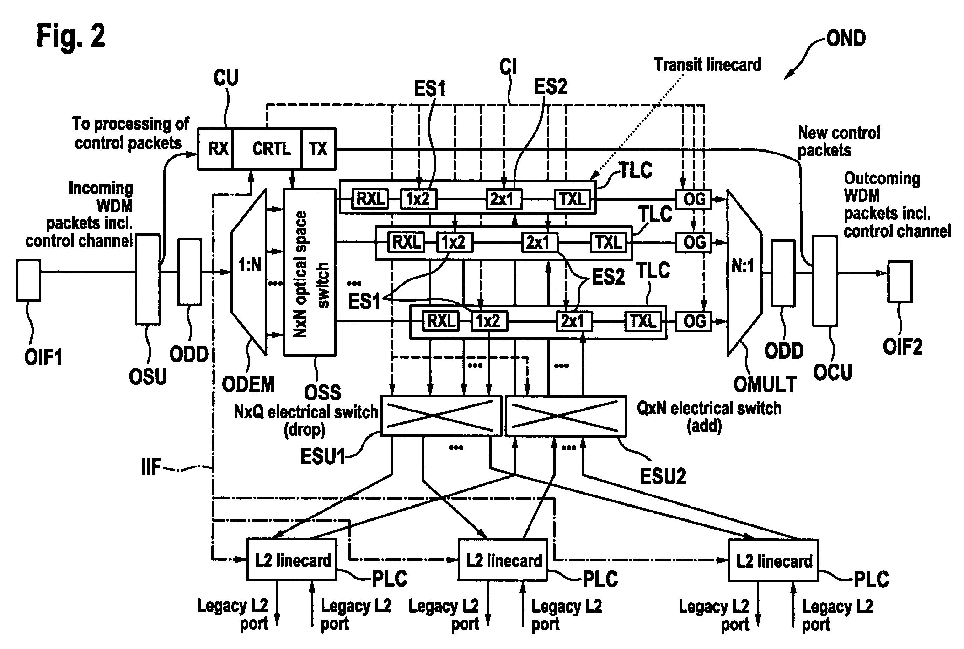

Figure 2 shows the proposed optical network device OND, as previously shown in Figure 1a as an element of the optical ring network ORN.

The optical network device OND contains an interface OIF1, with which the optical network device OND can be connected to an optical fiber. At the optical interface OIF1, the optical network device OND receives an optical TDM signal, that contains header information frames at a first wavelength, as well as optical TDM signals, that contain data frames, at second wavelengths.

The optical TDM signal containing the header information frames is terminated at a reception unit Rx of a control unit CU. The reception unit RX recovers from the optical TDM signal containing header information frames a TDM header signal. This TDM header signal consists of header information frames within timeslots, into which the TDM header signal is divided.

A controller CTRL contained within the control unit CU analyses the routing information contained within the header information frames, for controlling a number of transit linecards TLC. At these transit line cards TLC, the optical TDM signals containing TDM data signals are received.

A transit line card TLC contains a receiving unit RXL, which terminates an optical TDM signal containing a TDM data signal. The receiving unit RXL recovers from the optical TDM signal the TDM data signal. The TDM data signals recovered at different receiving units RXL of different line cards TLC are synchronous to each other.

On a transit line card TLC, the receiving unit RXL is connected to an electrical switch ES1. The electrical switch ES1 receives on its input data frames from the receiving unit RXL and forwards the data frames to one or both of its outputs. One of the outputs of the electrical switch ES1 is connected to an electrical switching ES2 of the transit line card TLC. This electrical switch ES2 has two inputs. On its first input, it receives data frames from the electrical switch ES1, on its other input, it receives data frames from on electrical switching unit ESU2. On its output, the electrical switch ES2 forwards data frames to a transmission unit TXL of the transmission line card TLC. The electrical switch ES1 is able forward from one of its outputs data frames to an electrical switching unit ESU1.

A transit line card generates a new synchronized TDM data signal, by inserting into this new synchronized TDM data signal at least one of the data frames that were recovered at the receiving unit RXL of the transit line card TLC. For deciding, which data frames are to be inserted into the new TDM data signal, the electrical switches ES1, ES2 use control information CI, that is provided by the controller CTRL of the control unit CU. At the transmission unit TXL of a transit line card TLC, a new optical TDM signal is generated, using the new generated TDM data signal.

At each of the transit line cards TLC, the transmission units TXL generate new optical TDM signals at respective different wavelengths, which correspond to the different wavelengths, at which optical TDM signals containing the TDM data signals were received.

To summarize the above in other words, a transit line card is a line card, that is able to receive an optical TDM signal at one wavelength, recover an electrical TDM data signal containing data frames within timeslots from the optical TDM signal, using a receiving unit RXL, to let recovered data frames transit from the receiving unit RX to a transmission unit TXL, and to generate a new optical TDM signal from the transit data frames at the one or another wavelength, using the transmission unit TXL. Furthermore, a transit line card TLC is preferably a line card, in which the receiving unit RXL and the transmission unit TXL are connected by a sequential connection of at least two electrical switches ES1, ES2. The first electrical switch ES1 placed on the transit line card TLC is able to receive a data frame from the reception unit RXL and to provide this data frame at its first output and/or at its second output to a second electrical switch ES2, which is also placed on the transit line card TLC. The second electrical switch ES2 is able to receive at its first input data frames from the first electrical switch ES1 and/or from another device ESU2 at its second input, and to provide received data frames to the transmission unit TXL of the line card TLC.

In even other words, a transit line cord is a line card that receives an optical signal by using a reception unit RXL, which furthermore contains one or more electrical switches ES1, ES2 for dropping one or more data frames contained in the optical signal, which furthermore is adapted to furthermore let one or more data frames transit from the reception unit RX through the one or more electrical switches ES1, ES2 to a transmission unit TXL, which then in turn transmits data frames that it has received, by generating an optical signal.

Other line cards PLC receive data frames from the electrical switch ESU1, that were extracted by electrical switching unit ES1 from the TDM data signals. Furthermore, the line cards PLC generate data frames, which are provided to the electrical switching unit ESU2, which then switches these data frames to the electrical switches ES2, for inserting these data frames into the TDM data signals that are generated by the transit line cards TLC. The configuration of the electrical switching units ESU1, ESU2 is controlled by the controller CTRL of the control unit CU.

Furthermore, the line cards PLC are connected to the controller CTRL via an internal interface IIF. For generating data frames containing dummy data, one or more line cards PLC are instructed by the controller CTRL via the internal interface IIF to generate such data frames. The data frames containing dummy data are then provided by the line card PLC via the electrical switching unit ESU2 to the electrical switches ES2, using control information CI which is provided by the controller CTRL via the internal interface IFF.

The controller CTRL configures the electrical switches ES2 of the transit line cards TLC, the electrical switching unit ESU2 and the line cards PLC, such that data frames containing dummy data are inserted into empty timeslots of the TDM data signals recovered from the received optical TDM signals at the transit line cards TLC. Preferably, the configures the electrical switches ES2 of the transit line cards TLC, the electrical switching unit ESU2 and the line cards PLC, such that data frames containing dummy data are inserted into any empty timeslots of the TDM data signals recovered from the received optical TDM signals.

Furthermore, the controller CTRL of the control unit CU generates routing information and places this routing information into header information frames, which are inserted into a new TDM header signal generated at the control unit CU. The inserted header information frames carry routing information, which indicates, that the inserted data frames contain dummy data.

An alternative solution for generating a data frame containing dummy data and inserting the data frame into a new generated TDM data signals is described now on. if a data frame containing dummy data is to be generated and inserted, the controller CTRL instructs an electrical switch ES2 to forward no data frame at all to a next following transmission unit TXL during a time slot. The transmission unit TXL does not receive a data frame for this time slot, and therefore generates a data frame containing dummy data itself and inserts this data frame into the new generated TDM data signal itself. The generation of the data frame containing dummy data for en empty time slot is thus a default function of the transmission unit TXL.

Dummy data is data, that is not received from another network device, but which is generated by the line card PLC, to fill a data frame. Dummy data may preferably be generated randomly, using a linear feedback shift register providing the dummy data at its output. Preferably, dummy data is provided in the form of predefined data stored within a storage device of the line card PLC not shown in Figure 2.

The transmission unit TX of the control unit CU generates a new optical TDM signal, using the generated new TDM header signal. The new optical TDM signal is generated by the transmission unit TX at that wavelength, at which the received optical TDM signal containing the received TDM header signal was received.

The transmission units TXL of the transit line cards TLC generate new optical TDM signals containing the respective TDM data signals as provided by the electrical switching units ES2.

At on optical interface OIF, to which one or more fibres of an optical ring can be connected, the optical TDM signals generated by the transmission units TX, TXL of the control units CU and the line cords TLC are transmitted.

To summarize the above in other words: A set of optical TDM signals carrying data frames of respective TDM data signals are received and terminated at the transit line cards TLC . The optical TDM signals have respective wavelengths forming a set of wavelengths. From the terminated optical TDM signals, the respective TDM data signals are recovered at the reception units RXL of the transit line cards. Furthermore, at the transmission units TXL of the transit line cards, a set of new optical TDM signals containing TDM data signals are generated. These new optical TDM signals are generated at respective new wavelengths, forming a set of new wavelengths. The set of these new wavelengths is equal to the set of the wavelengths, at which the optical TDM signals were received at the transmission line cards TLC. A transmission unit TXL of a line card TCL does not have to generate an optical TDM signal at the exact same wavelength at which the receiving unit RXL of this line card TLC received an optical TDM signal. But it is mandatory, that at each wavelength, at which an optical TDM signals, containing TDM data signals, were received at the optical network device OND, a new optical TDM signal containing a TDM data signal is generated and transmitted by the transit line cards TLC of this optical network device OND.

The transit line card TLC is connected to an optical gate OG, which compresses the optical TDM signal, that is generated by the transmission unit TXL of the transit line card TLC, during at least a part of a guard interval between two timeslot. The optical gate OG may be given in the form of a semiconductor optical amplifier (SOA), which is controlled by the controller CTRL of the control unit CU.

The advantage of this is, that a transmission unit TXL of a transit line card may be used to generate an optical data signals at different wavelengths for different timeslots. Depending on the configuration of the optical network device OND determined by the controller CTRL of the control unit CU, the transmission unit TXL of the transit line cords may change the wavelength, at which they generate optical TDM signals for different timeslots, for allowing full switching capability between the TDM data signals.

In the case, that a transmission unit TXL tunes the wavelength of the optical TDM signal generated by it from a first wavelength for a first timeslot to a second wavelength for a second timeslot, the transmission unit TXL may generate optical signal components at intermediate wavelengths during the guard interval, which may be the wavelengths of other optical TDM signals generated at other transmission units TXL of other transit line cards TLC. Thus, in order to ensure that such transient components of optical signals generated by a transmission unit TXL are not inserted into the optical fibres of the optical ring, for preventing a distortion of other optical TDM signals, the optical gate suppresses these transient components during at least a part of the guard interval.

Behind the optical interface OIF1, an optical splitting unit OSU is provided, which splits the optical TDM signal, containing header information frames, from the optical TDM signals containing data frames. The advantage of this is, that the optical TDM signal containing the TDM header signal can be processed separately from the optical TDM signals containing TDM data signals. At the output of the optical network device OND, before the optical interface OIF2, an optical coupling unit OCU is provided, which combines the optical TDM signal containing the new TDM header signal generated by the transmission unit TX of the control unit CU with the optical TDM signals containing TDM data signals generated by the transmission units TXL of the transit line cards TLC.

Behind the optical splitting unit OSU, an optical de-multiplexing unit ODEM de-multiplexes the received optical TDM signals, containing TDM data signals, from the set of optical TDM signals received from the optical splitting unit.

The optical TDM signals containing TDM data signals are provided by the optical de-multiplexing unit ODEM to separate inputs of an optical space switch OSS. The optical space switch OSS switches the optical TDM signals containing TDM data signals from its inputs to its outputs and provides the optical TDM signals containing TDM data signals to the line cards TLC.

Data frames of one TDM data signal are switched from one TDM data signal to another TDM data signal, by switching the data frames from an electrical switching unit ES1 of a line card TLC to the electrical switching unit ESU1, forwarding the data frame from the electrical switching unit ESU 1 to a line card PLC, forwarding the data frame from a line card PLC to the electrical switching unit ESU2, and switching the data frame from the electrical switching ESU2 to an electrical switch ES2 of another line card TLC. At an electrical switch ES2, the provided data frame is then inserted into the new optical TDM signal generated at that line card TLC. The new optical TDM signals generated at the transmission units TXL of the transmission line cards TLC are then multiplexed by an optical multiplexing unit OMULT into a set of optical TDM signals that are provided to an optical coupling unit OCU.

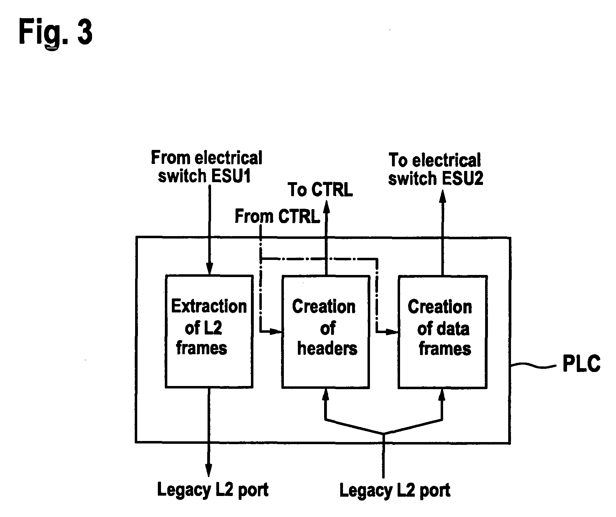

The optical network device OND contains a number of N transit line cards TLC. Each transit line card TLC is connected via an electrical switch ES1 to an input ports of an NxQ electrical switching unit ESU1, wherein Q is a number smaller than N, defining the number of output ports of the electrical switching unit ESU 1. The electrical switching unit ESU1 switches data frames from its N input ports to its Q output ports. The Q output ports of the electrical switching unit ESU1 are connected to Q line cards PLC. The Q line cards are furthermore connected to Q input ports of a second electrical switching unit ESU2. The electrical switching unit ESU2 contains furthermore N output ports, which are connected to the electrical switches ES2 of the N transit line cords TLC. The controller CTRL of the control unit configures the electrical switches ES1, ES2 of the transit line cards TLC and the electrical switching units ESU1, ESU2, by providing control information CI. Preferably, one or more of the electrical switches, ES1, ES2, the electrical switching units ECU1, ECU2, and the line cards PLC contain buffers, not shown in Figure 3, for aligning data frames in time. By this, data frames, coming from different TDM signals, can be aligned in time.

The advantage of using the optical signal switch OSS is the following: In the case that the electrical switching units ESU2 are not of such size, that the electrical switching units ESU1, ESU2 are able to connect all electrical switches ES1 of all line cards TLC with all electrical switches ES2 of all other line cards TLC, the switching of data frames has to be performed using one or more of the line cards PLC connecting the electrical switching units ESU1, ESU2. Furthermore, if no optical space switch OSS would be used, the transmission units TXL of the transmission line cards TLC would have to be able to transmit optical TDM signals at varying wavelengths which would vary over time for different timeslots, for enabling a full switching capability of data frames between the different optical TDM signals handled at the line cards TLC. In order to allow an operation of the transmission units TXL of the line cards TLC at fixed wavelength, full switching capability of data frames between the different optical TDM signals handled at the line cards TLC is enabled, by allowing wavelength conversion of the optical TDM signals using the optical space switch OSS.

Behind the optical splitting unit OSU and before the optical demultixplexer ODEM, an optical delay device ODD is placed. The optical delay device ODD delays the optical TDM signals carrying the TDM data signals with respect to the optical TDM signal carrying the TDM header signal. The advantage of this is, that by delaying the optical TDM signals carrying the TDM data signals, the amount of time available to the control unit CU of the device OND for analysing routing information, contained in the header information frames of the header signal, is increased.

Furthermore, an optical delay device ODD is placed behind the multixplexing device OMULT and before the optical coupling unit OCU. The optical delay device ODD delays the optical TDM signals carrying the TDM data signals with respect to the optical TDM signal carrying the TDM header signal. The advantage of this is, that by delaying the optical TDM signals carrying the TDM data signals, the amount of time available to a control unit CU of a next node, in the transmission direction, for analysing routing information, contained in the header information frames of the header signal, is increased.

The optical delay device ODD is preferably an array waveguide grating (AWG).

The line cards PLC are furthermore adapted to receive data packets from other networks or other network devices, which were not previously shown within the Figure 1a. Furthermore, the line cords PLC are adapted to forward data of extracted data frames to other network devices or networks not previously shown in the Figure 1a.

A line card PLC is shown in detail in Figure 3. The line card PLC receives data frames from the electrical switching unit ESU1. Data frames, which ore to be forwarded to other networks or other network devices are then used, for decapsulating from such data fromes data frames or data pockets of a lower protocol layer. These decapsulated frames or decapsulated data packets are then forwarded to such a lower protocol layer.

Furthermore, data frames received from the electrical switching unit ESU1 may be forwarded to the electrical switching unit ESU2.
Data frames or data packets received from a lower protocol layer port L2 are encapsulated into one or more data frames, which then are forwarded to the electrical switching unit ESU2.

For deciding at the line card PLC, which of the data frames received from the electrical switching unit ESU1 are to be forwarded to the electrical switching unit ESU2 or to the lower protocol layer port L2, control information CI is received from the controller CTRL.

Furthermore, the line card PLC is adapted to create data frames containing dummy data, using on the control information CI provided by the controller CTRL.

Even furthermore, the line card PLC is adapted to create routing information related to data frames forwarded by the line card PLC to the electrical switching ESU2. This routing information is provided to the controller CTRL of the control unit CU via the internal interface IIF. The controller CTRL uses this routing information for generating the new TDM header signal.

The transit line card PLC contains preferably a buffer, not shown in Figure 3, for aligning data frames, which are to be provided to the electrical switching unit EDSU2, in time. By this, the line card PLC is able to align data frames, coming from different TDM signals, in time.

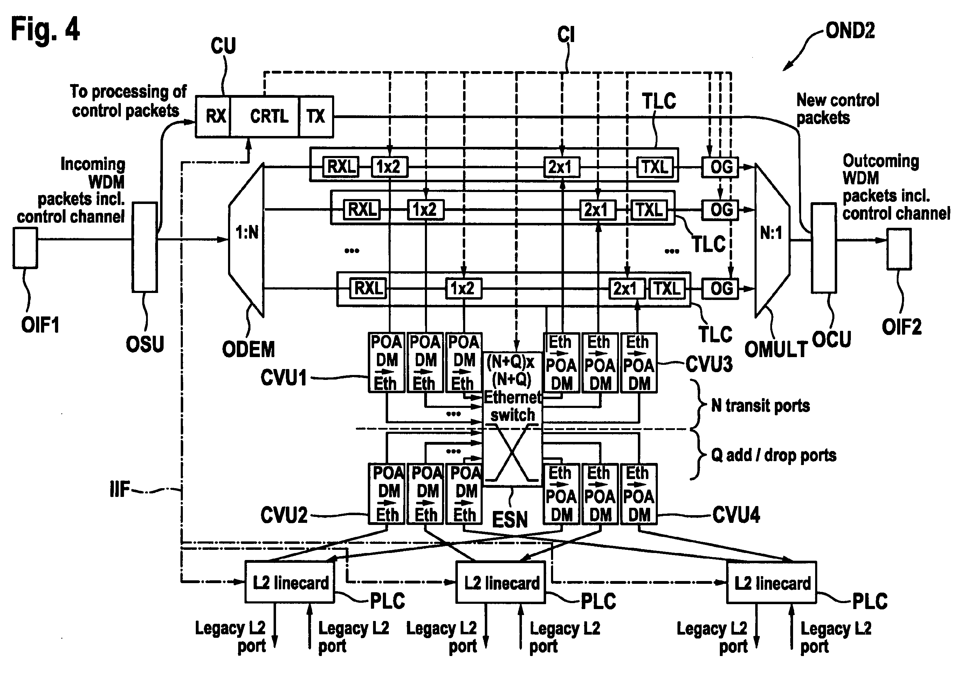

Figure 4 shows the optical network device according to an alternative solution. In this solution, the electrical switching ESU1, ESU2 are replaced by an Ethernet switch ESW of the size (N+q) x (N+Q). The Ethernet switch ESW has N+Q input ports and N+Q output ports.

The input ports of the Ethernet switch ESW are connected to a number of conversion units CVU1, CVU2. The conversion units CVU1 convert data frames received from the electrical switches ES1 of the line cards TLC into Ethernet data packets, which then are provided to input ports of the Ethernet switch ESW. Furthermore, the conversion units CVU2 convert data frames provided by the line cards PLC to Ethernet frames, which then are provided to input ports of the Ethernet switch ESW. The Ethernet switch ESW contains a number of output ports. Output ports of the Ethernet switch ESW are connected to conversion units CVU3, CVU4. The conversion units CVU3 convert Ethernet frames received from the Ethernet switch ESW to data frames, which then are provided to the electrical switches ES2 of the transit line cards TLC. Furthermore, output ports of the Ethernet switch ESW provide Ethernet frames to conversion units CVU4, which convert these Ethernet frames to data frames, which then are provided to the line card PLC.

To summarize the above, the Ethernet switch ESW is connected via conversion units CVU1, CVU2, CVU3, CVU4 to the electrical switches ES1, ES2 of the transit line cards TLC as well as all input and output ports of the line cards PLC. Thus, the Ethernet switch ESW enables a full switching capability of data frames between the optical TDM signals handled by the line cards TLC. Thus, furthermore, no wavelength conversion of the received optical TDM signals has to be carried out before the transit line cards TLC, for allowing on operation of the transmission units TXL of the transit line cards TLC at fixed wavelengths with full switching capability ensured at the same time.

Furthermore, the Ethernet switch ESW allows full switching capability between the line cards TLC and the line cards PLC.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Figure 2, 3, and 4, including any functional blocks labeled as "controller" or "control unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "controller" or "control unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method of optical data transmission, comprising
- receiving a first optical time division multiplex (TDM) signal containing header information frames (HIF) at a first wavelength and second optical TDM signals containing data frames (DF) at respective second, different wavelengths, wherein furthermore said first wavelength is different to said second wavelengths,
- terminating said optical TDM signals,
- recovering from said second optical TDM signals respective synchronous TDM data signals (DS1, DS2, DS3), wherein said synchronous TDM data signals (DS1, DS2, DS3) contain data frames (DF) within synchronous time slots (TS),
- recovering from said first optical TDM signal a TDM header signal, containing header information frames (HIF) within time slots (TS) associated with said time slots (TS) containing data frames (DF) of said synchronous TDM data signals (DS1, DS2, DS3), wherein a duration of said time slots containing said header information frames (HIF) is equal to a duration of said time slots containing said data frames (DF),
- inserting at least one of said recovered data frames (DF) into at least one of generated new synchronous TDM data signals, using said header information frames (HIF),
- generating a new TDM header signal, inserting into empty time slots (TS) of said generated new synchronous TDM data signals data frames (DF) containing dummy data,
- inserting into time slots (TS) of said generated new TDM header signal header information frames (HIF), which indicate that the inserted data frames actually contain dummy data ,
- generating a new first optical TDM signal at said first wavelength using said generated new TDM header signal,
- generating new second optical TDM signals at said respective second wavelengths, using said generated new TDM data signals, and
- transmitting said new optical TDM signals.

2. Method according to claim 1,
wherein said time slots (TS) are separated by a guard interval (GI),
comprising furthermore
- suppressing an optical TDM signal of said generated set during at least a part of a guard interval (GI).

3. Method according to any of the claims 1 to 2,
comprising furthermore,
- splitting said first optical TDM signal from said second optical TDM signals,
- combining said new first optical TDM signal with said new second optical TDM signals.

4. Method according to claim 3,
comprising
- optically de-multiplexing said second optical TDM signals,
- switching said second optical TDM signals onto respective first line cards (TLC),
- terminating said second optical TDM signals at said respective first line cards (TLC),
wherein said step of generating said new synchronous TDM data signals includes switching data frames (DF) from one or more of said synchronous TDM data signals (DS1, DS2, DS3) into one or more of said new synchronous TDM data signals, using at least two electrical switching devices (ESU1, ESU2) and at least one second line card (PLC),
comprising furthermore
- generating said new second optical TDM signals at said respective first line cards (TLC), and
- multiplexing said new second optical TDM signals.

5. Method according to any of the claims 1 to 4,
comprising furthermore,
- receiving data packets,
- encapsulating said data packets into new data frames (DF),
- inserting said new data frames into at least one of said new synchronous TDM data signals, using at least one electrical switching device (ESU2).

6. Optical network device (OND),
comprising a first optical interface (OIF1), a second optical interface (OIF2), a number of first line cards (TLC), at least one control device (CU), and at least one second line card (PLC),
wherein said first optical interface (OIF) is adapted to receive a first optical time division multiplex (TDM) signal containing header information frames (HIF) at a first wavelength and second optical TDM signals containing data frames (DF) at respective second, different wavelengths, wherein furthermore said first wavelength is different to said second wavelengths,
wherein said first line cards (TLC) are adapted
- to terminate said second optical TDM signals and to recover from said second optical TDM signals respective synchronous TDM data signals (DS1, DS2, DS3), containing data frames (DF) within respective synchronous time slots (TS), wherein a duration of said time slots containing said header information frames (HIF) is equal to a duration of said time slots containing said data frames (DF),
wherein said control unit (CU) is adapted
- to terminate said first optical TDM signal and to recover from said first optical TDM signal a TDM header signal (HS), containing header information frames (HIF) within time slots (TS) associated with said time slots containing data frames (DF) of said synchronous TDM data signals (DS1, DS2, DS3),
wherein said second line card (PLC) or at least one of said first line cards (TLC) are adapted
- to provide data frames (DF) containing dummy data to said first line cards (TLC),
wherein said control unit (CU) is furthermore adapted to provide control information (CI) to said line cards (TLC, PLC), using said header information frames (HIF),
wherein said first line cards (TLC) are furthermore adapted, using said control information (CI),
- to insert at least one of said recovered data frames (DF) into at least one generated new synchronous TDM data signals, and by inserting into empty time slots (TS) of said generated new synchronous TDM data signals said data frames containing dummy data,
wherein said control unit (CU) is furthermore adapted
- to generate a new TDM header signal, and
- to insert into said new TDM header signal header information frames (HIF), which indicate that the inserted data frames actually contain dummy data,
wherein said first line cards (TLC) are furthermore adapted to generate respective new second optical TDM signals at said respective second wavelengths, using said generated new TDM data signals,
wherein said control unit (CU) is furthermore adapted to generate a new first optical TDM signal at said first wavelength, using said generated new TDM header signal,
and wherein said second optical interface (OIF) is adapted to transmit said new optical TDM signals.

7. Optical network device (OND) according to claim 6,
wherein said time slots (TS) are separated by a guard interval (GI),
comprising furthermore at least one optical gate (OG), adapted to suppress at least one of said new second optical TDM signals during at least a part of a guard interval (GI).

8. Optical network device according to claim 6 or 7,
comprising furthermore
- an optical splitting device (OSU) adapted to split said first optical TDM signal from said second optical TDM signals,
- an optical coupling device (OCU), adapted to combine said new first optical TDM signal with said new second optical TDM signals.

9. Optical network device (OND) according to claim 8,
comprising furthermore
- an optical de-multiplexing device (ODEM), adapted to optically split said second optical TDM signals,
- an optical switching unit (OSS), adapted to switch said second optical TDM signals from said optical de-multiplexing device (ODEM) onto said first line cards (TLC),
- at least two electrical switching devices (ESU1, ESU2), adapted to switch data frames (DF) from one or more of said first line cards (TLC) to one or more of said first line cards (TCL), using said second line card (PLC),
wherein said first line cards (TLC) are adapted to generate said new second optical TDM signals,
comprising furthermore an optical multiplexing device (OMULT), adapted to multiplex said new second optical TDM signals.

10. Optical network device (OND) according to claim 8 or 9,
wherein said second line card (PLC) is adapted
- to receive data packets, and
- to encapsulate said data packets into new data frames,
comprising furthermore at least one electrical switching device (ESU2), adapted to provide said new data frames to at least one of said first line cards (TLC),
and wherein at least one of said first line cards is adapted to insert said new data frames into at least one of said new synchronous TDM data signals.

## Patentansprüche

1. Verfahren zur optischen Datenübertragung, umfassend:
- den Empfang eines ersten optischen Zeitmultiplexsignals (Time Division Multiplex, TDM), erste Kopfdatenrahmen (Header Information Frames, HIF) auf einer ersten Wellenlänge umfassend, sowie zweiter optischer TDM-Signale, Datenrahmen (Dataframes, DF) auf respektiven zweiten, unterschiedlichen Wellenlängen umfassend, wobei weiterhin besagte erste Wellenlänge eine andere ist als besagte zweite Wellenlängen,
- das Beenden besagter optischer TDM-Signale,
- die Rückgewinnung respektiver synchroner TDM-Datensignale (DS1, DS2, DS3) von besagten zweiten optischen TDM-Signalen, wobei besagte synchrone TDM-Datensignale (DS1, DS2, DS3) Datenrahmen (Data Frames, DF) in synchronen Zeitschlitzen (Time Slots, TS) enthalten,
- die Rückgewinnung eines TDM-Kopfsignals von besagtem erstem TDM-Signal, Kopfdatenrahmen (HIF) in Zeitschlitzen (TS) umfassend, die mit besagten Zeitschlitzen (TS) assoziiert sind, die Datenrahmen (DF) besagter synchroner TDM-Datensignale (DS1, DS2, DS3) umfassen, wobei eine Zeitdauer besagter, besagte Kopfdatenrahmen (HIF) enthaltender Zeitschlitze gleich einer Dauer besagter, besagte Datenrahmen (DF) enthaltender Zeitschlitze ist.
- das Einfügen von mindestens einem besagter rückgewonnener Datenrahmen (DF) in mindestens eines der generierten, neuen synchronen TDM-Datensignale, dabei Kopfdatenrahmen (HIF) verwendend,
- das Generieren eines neuen TDM-Kopfsignals, Dummydaten enthaltende Datenrahmen (DF) in leere Zeitschlitzen (TS) besagter generierter, neuer synchroner TDM-Datensignale einfügend,
- das Einfügen von Kopfdatenrahmen (HIF) in Zeitschlitze (TS) von besagten generierten, neuen TDM-Kopfsignalen, die indizieren, dass die eingefügten Datenrahmen gegenwärtig Dummydaten enthalten,
- das Generieren eines neuen ersten optischen TDM-Signals auf besagter erster Wellenlänge unter Verwendung besagten generierten, neuen TDM-Kopfsignals,
- das Generieren neuer zweiter optischer TDM-Signale auf besagten zweiten Wellenlängen unter Verwendung besagter generierter, neuer TDM-Datensignale,
- das Übermitteln besagter neuer optischer TDM-Signale.

2. Verfahren nach Anspruch 1,
wobei besagte Zeitschlitze (TS) durch ein Schutzintervall (Guard Interval, GI) getrennt sind,
weiterhin umfassend:
- das Unterdrücken eines optischen TDM-Signals besagten generierten Satzes während mindestens eines Teils eines Schutzintervalls (GI).

3. Verfahren nach einem jeglichen der Ansprüche 1 bis 2,
weiterhin umfassend:
- das Trennen besagten ersten optischen TDM-Signals von besagtem zweitem optischem TDM-Signal durch Splitting,
- das Kombinieren besagten neuen, ersten optischen TDM-Signals mit den besagten neuen, zweiten optischen TDM-Signalen,

4. Verfahren nach Anspruch 3,
umfassend:
- das optische De-Multiplexing besagter zweiter optischer TDM-Signale,
- das Umschalten besagter zweiter optischer TDM-Signale auf respektive erste Leitungskarten (TLC),
- das Beenden besagter zweiter optischer TDM-Signale an besagten, respektiven ersten Leitungskarten (TLC),
wobei besagter Schritt des Generierens besagter neuer, synchroner TDM-Datensignale das Umschalten von Datenrahmen (DF) von einem oder mehreren besagter synchroner TDM-Datensignale (DS1, DS2, DS3) in eines oder mehrere besagter neuer TDM-Datensignale umfasst, mindestens zwei elektrische Schaltvorrichtungen (ESU1, ESU2) und eine zweite Leitungskarte (PLC) verwendend,
weiterhin umfassend:
- das Generieren besagter neuer, zweiter optischer TDM-Signale an besagten, respektiven ersten Leitungskarten (TLC), und
- das Multiplexen besagter neuer, zweiter optischer TDM-Signale.

5. Verfahren nach einem jeglichen der Ansprüche 1 bis 4,
weiterhin umfassend:
- den Empfang von Datenpaketen,
- das Verkapseln besagter Datenpakete in neue Datenrahmen (DF),
- das Einfügen besagter neuer Datenrahmen in mindestens eines besagter neuer, synchroner TDM-Datensignale unter Verwendung von mindestens einer elektrischen Schaltvorrichtung (Electrical Switching Unit, ESU2).

6. Optische Netzwerkvorrichtung (Optical Network Device, OND),
eine erste optische Schnittstelle (Optical Interface One, OIF1), eine Anzahl erster Leitungskarten (TLC), mindestens eine Steuereinheit (Control Device, CU) und mindesten eine zweite Leitungskarte (PLC) umfassend,
wobei besage erste optische Schnittstelle (Optical Interface, OIF) ausgelegt ist für den Empfang eines ersten optischen Zeitmultiplexsignals (Time Division Multiplex, TDM), erste Kopfdatenrahmen (Header Information Frames, HIF) auf einer ersten Wellenlänge umfassend, sowie zweiter optischer TDM-Signale, Datenrahmen (Dataframes, DF) auf respektiven zweiten, unterschiedlichen Wellenlängen umfassend, wobei weiterhin besagte erste Wellenlänge eine andere ist als besagte zweite Wellenlängen,
wobei besagte erste Leitungskarten (TLC) ausgelegt sind für:
- die Beendigung besagter zweiter optischer TDM-Signale und zur Rückgewinnung respektiver TDM-Datensignale (DS1, DS2, DS3) von besagten zweiten optischen TDM-Signalen, Datenrahmen (Data Frames, DF) in respektiven synchronen Zeitschlitzen (TS) enthaltend,
wobei eine Zeitdauer besagter Zeitschlitze, die besagte Kopfdatenrahmen (HIF) enthalten, einer Dauer besagter Zeitschlitze entspricht, die besagte Datenrahmen (DF) enthalten, wobei besagte Steuereinheit (CU) ausgelegt ist für:
- das Beenden besagten ersten optischen TDM-Signals und für die Rückgewinnung eines TDM-Kopfsignals (HS) von besagtem erstem optischem TDM-Signal, welches Kopfdatenrahmen (HIF) in Zeitschlitzen (TS) umfasst, die mit besagten, Datenrahmen (DF) enthaltenden Zeitschlitzen der besagten synchronen TDM-Datensignale (DS1, DS2, DS3) assoziiert sind,
wobei besagte zweite Leitungskarte (PLC) oder mindestens eine der besagten ersten Leitungskarten (TLC) ausgelegt sind für:
- das Bereitstellen von Datenrahmen (DF) mit Dummydaten für besagte erste Leitungskarten (TLC),
wobei besagte Steuereinheit (CU) weiterhin ausgelegt ist für das Bereitstellen von Steuerinformationen (CI) für besagte Leitungskarten (TLC, PLC), dabei besagte Kopfdatenrahmen (HIF) verwendend,
wobei besagte erste Leitungskarten (TLC) weiterhin dafür ausgelegt sind, um unter Verwendung besagter Steuerinformationen (CI)
- mindestens einen der besagten, rückgewonnenen Datenrahmen (DF) in mindestens ein generiertes neues, synchrones TDM-Datensignal einzufügen, und wobei durch das Einfügen besagter generierter, neuer synchroner TDM-Datensignale in leere Zeitschlitze (TS) besagte Datenrahmen Dummydaten enthalten,
wobei besagte Steuereinheit (CU) weiterhin ausgelegt ist für:
- das Generieren eines neuen TDM-Kopfsignals, und
- für das Einfügen von Kopfdatenrahmen (HIF) in besagte neue TDM-Kopfsignale, die indizieren, dass die eingefügten Datenrahmen gegenwärtig Dummydaten enthalten,
wobei die besagten ersten Leitungskarten (TLC) weiterhin ausgelegt sind für das Generieren respektiver neuer, zweiter optischer TDM-Signale auf besagten, respektiven zweiten Wellenlängen, dabei besagte generierte, neue TDM-Datensignale verwendend, wobei die besagte Steuereinheit (CU) weiterhin ausgelegt sind für das Generieren eines neuen ersten, optischen TDM-Signals auf besagter erster Wellenlänge, dabei die besagten generierten, neuen TDM-Kopfsignale verwendend,
und wobei besagte zweite optische Schnittstelle (OIF) ausgelegt ist für das Übertragen besagter neuer optischer TDM-Signale.

7. Die optische Netzwerkvorrichtung (OND) nach Anspruch 6,
wobei besagte Zeitschlitze (TS) durch ein Schutzintervall (Guard Interval, GI) getrennt sind,
weiterhin mindestens ein optisches Gate (OG) umfassend, das ausgelegt ist für das Unterdrücken von zumindest einem der besagten neuen, zweiten optischen TDM-Signale im Verlauf von zumindest einem Teil eines Schutzintervalls (GI).

8. Optische Netzwerkvorrichtung nach Anspruch 6 oder 7,
weiterhin umfassend:
- eine optische Splittingvorrichtung (Optical Splitting Unit, OSU), die ausgelegt ist für das trennen besagten ersten optischen TDM-Signals von besagtem zweitem optischem TDM-Signal,
- eine optische Kopplungsvorrichtung (Optical Coupling Unit, OSU), die ausgelegt ist für das Koppeln besagten neuen, ersten optischen TDM-Signals mit besagtem neuem, zweitem optischem TDM-Signal,

9. Die optische Netzwerkvorrichtung (OND) nach Anspruch 8,
weiterhin umfassend:
- eine optische Demultiplexvorrichtung (Optical De-Multiplexing Device, ODEM), ausgelegt für das optische Splitten besagter zweiter optischer TDM-Signale,
- eine optische Schalteinheit (Optical Switching Unit, OSS), ausgelegt für das Umschalten besagter zweiter, optischer TDM-Signale von besagter optischer De-Multiplexing-Vorrichtung (ODEM) auf besagte erste Leitungskarten (TLC),
- mindestens zwei elektrische Schalteinheiten (ESU1, ESU2), ausgelegt für das Umschalten von Datenrahmen (DF) von einer oder mehreren der besagten ersten Leitungskarten (TLC) auf eine oder mehrere der besagten ersten Leitungskarten (TLC), dabei besagte zweite Leitungskarte (PLC) verwendend,
wobei die besagten ersten Leitungskarten (TLC) ausgelegt sind für das Generieren der besagten zweiten optischen TDM-Signale,
weiterhin eine optische Multiplexingvorrichtung (Optical Multi-Trees, OMULT) umfassend, ausgelegt für das Multiplexen der besagten neuen, zweiten optischen TDM-Signale.

10. Optische Netzwerkvorrichtung (Optical Network Device, OND) nach Anspruch 8 oder 9,
wobei besagte zweite Leitungskarte (PLC) ausgelegt ist für:
- den Empfang von Datenpaketen, und
- das Verkapseln besagter Datenpakete in neue Datenrahmen,
weiterhin mindestens eine elektrische Schaltvorrichtung (ESU2) umfassend, die dafür ausgelegt ist, um besagte neue Datenrahmen mindestens einer der besagten ersten Leitungskarten (TLC) zur Verfügung zu stellen,
und wobei mindestens eine der besagten ersten Leitungskarten dafür ausgelegt ist, um neue Datenrahmen in mindestens eines der besagten neuen, synchronen TDM-Datensignale einzufügen.

## Revendications

1. Procédé de transmission de données optiques, comprenant les étapes suivantes :
- recevoir un premier signal optique multiplexé par répartition dans le temps (TDM) contenant des trames d'informations d'en-tête (HIF) à une première longueur d'onde et des deuxièmes signaux optiques TDM contenant des trames de données (DF) à des deuxièmes longueurs d'onde différentes respectives, ladite première longueur d'onde étant en outre différente desdites deuxièmes longueurs d'onde,
- interrompre lesdits signaux optiques TDM,
- récupérer à partir desdits deuxièmes signaux optiques TDM des signaux de données TDM synchrones respectifs (DS1, DS2, DS3), lesdits signaux de données TDM synchrones (DS1, DS2, DS3) contenant des trames de données (DF) dans des créneaux temporels synchrones (TS),
- récupérer à partir dudit premier signal optique TDM un signal d'en-tête TDM, contenant des trames d'informations d'en-tête (HIF) dans des créneaux temporels (TS) associés auxdits créneaux temporels (TS) contenant des trames de données (DF) desdits signaux de données TDM synchrones (DS1, DS2, DS3), une durée desdits créneaux temporels contenant lesdites trames d'informations d'en-tête (HIF) étant égale à une durée desdits créneaux temporels contenant lesdites trames de données (DF),
- insérer au moins une desdites trames de données (DF) récupérées dans au moins un des nouveaux signaux de données TDM synchrones générés, en utilisant lesdites trames d'informations d'en-tête (HIF),
- générer un nouveau signal d'en-tête TDM, insérer dans des créneaux temporels (TS) vides desdits nouveaux signaux de données TDM synchrones générés des trames de données (DF) contenant des données fictives,
- insérer dans des créneaux temporels (TS) dudit nouveau signal d'en-tête TDM généré des trames d'informations d'en-tête (HIF), qui indiquent que les trames de données insérées contiennent en fait des données actives,
- générer un nouveau premier signal optique TDM à ladite première longueur d'onde en utilisant ledit nouveau signal d'en-tête TDM généré,
- générer des nouveaux deuxièmes signaux optiques TDM auxdites deuxièmes longueurs d'onde respectives, en utilisant lesdits nouveaux signaux de données TDM générés, et
- transmettre lesdits nouveaux signaux optiques TDM.

2. Procédé selon la revendication 1,
dans lequel lesdits créneaux temporels (TS) sont séparés par un intervalle de garde (GI), comprenant en outre l'étape suivante :
- supprimer un signal optique TDM dudit ensemble généré durant au moins une partie d'un intervalle de garde (GI).

3. Procédé selon l'une quelconque des revendications 1 à 2, comprenant en outre les étapes suivantes :
- séparer ledit premier signal optique TDM desdits deuxièmes signaux optiques TDM,
- combiner ledit nouveau premier signal optique TDM avec lesdits nouveaux deuxièmes signaux optiques TDM.

4. Procédé selon la revendication 3, comprenant les étapes suivantes :
- démultiplexer optiquement lesdits deuxièmes signaux optiques TDM,
- commuter lesdits deuxièmes signaux optiques TDM sur des premières cartes de ligne (TLC) respectives,
- interrompre lesdits deuxièmes signaux optiques TDM au niveau desdites premières cartes de ligne (TLC) respectives,
dans lequel ladite étrape de génération desdits nouveaux signaux de données TDM synchrones comprend la commutation de trames de données (DF) entre un ou plusieurs desdits signaux de données TDM synchrones (DS1, DS2, DS3) et un ou plusieurs desdits nouveaux signaux de données TDM synchrones, en utilisant au moins deux dispositifs de commutation électrique (ESU1, ESU2) et au moins une deuxième carte de ligne (PLC), comprenant en outre les étapes suivantes :
- générer lesdits nouveaux deuxièmes signaux optiques TDM au niveau desdites premières cartes de ligne (TLC) respectives, et
- multiplexer lesdits nouveaux deuxièmes signaux optiques TDM.

5. Procédé selon l'une quelconque des revendications 1 à 4, comprenant en outre les étapes suivantes :
- recevoir des paquets de données,
- encapsuler lesdits paquets de données dans de nouvelles trames de données (DF),
- insérer lesdites nouvelles trames de données dans au moins un desdits nouveaux signaux de données TDM synchrones, en utilisant au moins un dispositif de commutation électrique (ESU2).

6. Dispositif de réseau optique (OND),
comprenant une première interface optique (OIF1), une deuxième interface optique (OIF2), plusieurs premières cartes de ligne (TLC), au moins un dispositif de commande (UC) et au moins une deuxième carte de ligne (PLC),
dans lequel ladite première interface optique (OIF) est adaptée pour recevoir un premier signal optique multiplexé par répartition dans le temps (TDM) contenant des trames d'informations d'en-tête (HIF) à une première longueur d'onde et des deuxièmes signaux optiques TDM contenant des trames de données (DF) à des deuxièmes longueurs d'onde différentes respectives, ladite première longueur d'onde étant en outre différente desdites deuxièmes longueurs d'onde,
dans lequel lesdites premières cartes de ligne (TLC) sont adaptées
- pour interrompre lesdits deuxièmes signaux optiques TDM et pour récupérer à partir desdits deuxièmes signaux optiques TDM des signaux de données TDM synchrones respectifs (DS1, DS2, DS3), contenant des trames de données (DF) dans des créneaux temporels synchrones respectifs (TS),
dans lequel une durée desdits créneaux temporels contenant lesdites trames d'informations d'en-tête (HIF) est égale à une durée desdits créneaux temporels contenant lesdites trames de données (DF),
dans lequel ladite unité de commande (UC) est adaptée
- pour interrompre ledit premier signal optique TDM et pour récupérer à partir dudit premier signal optique TDM un signal d'en-tête TDM (HS), contenant des trames d'informations d'en-tête (HIF) dans des créneaux temporels (TS) associés auxdits créneaux temporels contenant des trames de données (DF) desdits signaux de données TDM synchrones (DS1, DS2, DS3),
dans lequel ladite deuxième carte de ligne (PLC) ou au moins une desdites premières cartes de ligne (TLC) sont adaptées
- pour fournir des trames de données (DF) contenant des données fictives auxdites premières cartes de ligne (TLC),
dans lequel ladite unité de commande (CU) est en outre adaptée pour fournir des informations de commande (CI) auxdites cartes de ligne (TLC, PLC), en utilisant lesdites trames d'informations d'en-tête (HIF),
dans lequel lesdites premières cartes de ligne (TLC) sont en outre adaptées, en utilisant lesdites informations de commande (CI),
- pour insérer au moins une desdites trames de données (DF) récupérées dans au moins un nouveau signal de données TDM synchrone généré, et en insérant dans des créneaux temporels (TS) vides desdits nouveaux signaux de données TDM synchrones générés lesdites trames de données contenant des données fictives, dans lequel ladite unité de commande (UC) est adaptée en outre
- pour générer un nouveau signal d'en-tête TDM, et
- pour insérer dans ledit nouveau signal d'en-tête TDM des trames d'informations d'en-tête (HIF), qui indiquent que les trames de données insérées contiennent en fait des données actives,
dans lequel lesdites premières cartes de ligne (TLC) sont en outre adaptées pour générer des nouveaux deuxièmes signaux optiques TDM respectifs auxdites deuxièmes longueurs d'onde respectives, en utilisant lesdits nouveaux signaux de données TDM générés, dans lequel ladite unité de commande (UC) est en outre adaptée pour générer un nouveau premier signal optique TDM à ladite première longueur d'onde, en utilisant ledit nouveau signal d'en-tête TDM généré,
et dans lequel ladite deuxième interface optique (OIF) est adaptée pour transmettre lesdits nouveaux signaux optiques TDM.

7. Dispositif de réseau optique (OND) selon la revendication 6,
dans lequel lesdits créneaux temporels (TS) sont séparés par un intervalle de garde (GI), comprenant en outre au moins une porte optique (OG), adaptée pour supprimer au moins un desdits nouveaux deuxièmes signaux optiques TDM durant au moins une partie d'un intervalle de garde (GI).

8. Dispositif de réseau optique selon la revendication 6 ou 7, comprenant en outre
- un dispositif d'éclatement optique (OSU) adapté pour séparer ledit premier signal optique TDM desdits deuxièmes signaux optiques TDM,
- un dispositif de couplage optique (OCU), adapté pour combiner ledit nouveau premier signal optique TDM avec lesdits nouveaux deuxièmes signaux optiques TDM.

9. Dispositif de réseau optique (OND) selon la revendication 8, comprenant en outre
- un dispositif de démultiplexage optique (ODEM), adapté pour séparer optiquement lesdits deuxièmes signaux optiques TDM.
- une unité de commutation optique (OSS), adaptée pour commuter lesdits deuxièmes signaux optiques TDM provenant dudit dispositif de démultiplexage optique (ODEM) sur lesdites premières cartes de ligne (TLC),
- au moins deux dispositifs de commutation électrique (ESU1, ESU2), adaptés pour commuter des trames de données (DF) entre une ou plusieurs desdites premières cartes de ligne (TLC) et une ou plusieurs desdites premières cartes de ligne (TCL), en utilisant ladite deuxième carte de ligne (PLC),
dans lequel lesdites premières cartes de ligne (TLC) sont adaptées pour générer lesdits nouveaux deuxièmes signaux optiques TDM,
comprenant en outre un dispositif de multiplexage optique (OMULT), adapté pour multiplexer lesdits nouveaux deuxièmes signaux optiques TDM.

10. Dispositif de réseau optique (OND) selon la revendication 8 ou 9, dans lequel ladite deuxième carte de ligne (PLC) est adaptée
- pour recevoir des paquets de données, et
- pour encapsuler lesdits paquets de données dans de nouvelles trames de données,
comprenant en outre au moins un dispositif de commutation électrique (ESU2), adapté pour fournir lesdites nouvelles trames de données à au moins une desdites premières cartes de ligne (TLC),
et dans lequel au moins une desdites premières cartes de ligne est adaptée pour insérer lesdites nouvelles trames de données dans au moins un desdits nouveaux signaux de données TDM synchrones.
